# EUROPEAN PATENT APPLICATION

(11) **EP 4 852 075 A1**
(43) Date of publication of application: **09.12.2026**
(21) Application number: 25181168.3
(22) Date of filing: 05.06.2025
(51) Int. Cl.: H01M 4/131, H01M 4/133, H01M 4/134, H01M 4/136, H01M 4/36, H01M 4/38, H01M 4/505, H01M 4/525, H01M 4/58, H01M 4/587, H01M 4/62

(54) **ELECTROCHEMICAL ENERGY STORAGE DEVICE**

(71) Applicant: Cellforce Group GmbH, 72138 Kirchentellinsfurt (DE)
(72) Inventor: Riewald, Felix, 72138 Kirchentellinsfurt (DE)
(74) Representative: Michalski Hüttermann & Partner mbB

(57) **Abstract**

The present invention relates to an Electrochemical energy storage device (100), comprising
- an anode (110) with an anode active material composition (114);
- a cathode (120) with a cathode active material composition (124);
- a separator (130) disposed between the cathode (120) and the anode (110); and
- an electrolyte (150) disposed between the cathode (120) and the anode (110),
wherein
- the anode (110) comprises at least
- a silicon-carbon composite material in the amount of ≥ 45 wt.-% to ≤ 96 wt.-%, relating to the anode active material composition (114),
- an anisometric flake graphite in the amount of ≥ 2 wt.-% to ≤ 45 wt.-%, relating to the anode active material composition (114);
- carbon nanotubes in the amount of > 0 wt.-% to < 1 wt.-%, relating to the anode active material composition (114); and
- a binder, in particular a polymer binder, in the amount of 0.5 wt.-% to 4 wt.-%, relating to the anode active material composition (114); and wherein

- the cathode comprises a cathode material structure (126) comprising the cathode active material (124), wherein the cathode material structure (126) comprises lithium nickel manganese cobalt oxide with a nickel content of more than 80 wt.-% and at least one of lithium iron phosphate and lithium manganese iron phosphate.

## Description

The present invention relates to an electrochemical storage device which comprises an anode with a silicon carbon composite material and a specific cathode. The present invention further relates to an electrically driven vehicle comprising such an electrochemical energy storage device.

Electrochemical energy storage devices are widely known in the art. Particularly in view of the advancing electrification of vehicles, electrochemical energy storage devices are becoming increasingly important. With this regard, especially the charging time as well as the cycle stability becomes more important to gain better acceptance in the market.

Due to the rapidly increasing importance of electrochemical energy storage devices, in particular Li-ion batteries, there is a continuous need for further development and improvement in the field of formation of such devices.

DE 11 2015 004 095 T5 describes a positive electrode mixture layer which includes a first layer that has a main surface and a second layer formed closer to the positive electrode current collector side than the first layer. A ratio of the volume of the first layer to the volume of the positive electrode mixture layer is 20 to 75 vol%. The first layer contains lithium iron phosphate (LFP) and lithium nickel manganese cobalt oxide (NCM). A ratio of the mass of the LFP to the total mass of the LFP and the NCM in the first layer is more than 0 and 80 mass% or less. The second layer contains NCM. A ratio of the mass of the LFP (1) to the total mass of the positive electrode active material in the positive electrode mixture layer is 7.5 to 20 mass%. A maximum pore size of the first layer is 0.50 to 0.70 µm.

US 2015/0017499 A1 describes that in a lithium ion battery having an electrode wound group in which a positive electrode, a negative electrode, and a separator are wound and an electrolytic solution provided in a battery container, a discharge capacity of the battery being 30 Ah or more and 125 Ah or less, the positive electrode has a current collector and a positive electrode composite applied to both surfaces of the current collector, and the positive electrode composite has following configuration. The positive electrode composite contains a mixed active material of layered lithium nickel manganese cobalt composite oxide (NMC) and olivine lithium iron phosphate (LFP).

Based on the above, it is an object of the present invention to overcome at least one disadvantage of the prior art, at least partially. It is particularly an object of the present invention to provide an electrochemical energy storage device which shows good cycling stability and long lifetime.

This object is solved by an electrochemical energy storage device having the features of claim 1. This object is further solved by an electrically driven vehicle having the features of claim 15. Preferred embodiments of the invention are described in the dependent claims and the following description, each of which may individually or in combination represent an aspect of the invention unless explicitly excluded. Where a feature is shown in combination with another feature, this is for simplified illustration of the invention only and is in no way intended to imply that this feature cannot be a further feature of the invention without the other feature.

Described is an Electrochemical energy storage device, comprising
- an anode with an anode active material composition;
- a cathode with a cathode active material composition;
- a separator disposed between the cathode and the anode; and
- an electrolyte disposed between the cathode and the anode, wherein
- the anode comprises at least
   - a silicon-carbon composite material in the amount of ≥ 45 wt.-% to ≤ 96 wt.-%, relating to the anode active material composition,
   - an anisometric flake graphite in the amount of ≥ 2 wt.-% to ≤ 45 wt.-%, relating to the anode active material composition;
   - carbon nanotubes in the amount of > 0 wt.-% to < 1 wt.-%, relating to the anode active material composition; and
   - a binder, in particular a polymer binder, in the amount of 0.5 wt.-% to 4 wt.-%, relating to the anode active material composition; and wherein'
- the cathode comprises a cathode material structure comprising the cathode active material composition, wherein the cathode material structure comprises lithium nickel manganese cobalt oxide with a nickel content of more than 80 wt.-% and at least one of lithium iron phosphate and lithium manganese iron phosphate.

Such an electrochemical energy storage device has significant advantages over solutions of the prior art.

The electrochemical energy storage device has a base structure which is generally known from the prior art. The electrochemical energy storage device thus comprises an anode, a cathode, a separator disposed between the cathode and the anode, and an electrolyte disposed between the cathode and the anode.

With regard to the anode, the latter comprises at least
- a silicon-carbon composite material in the amount of ≥ 45 wt.-% to ≤ 96 wt.-%, relating to the anode active material composition,
- an anisometric flake graphite in the amount of ≥ 2 wt.-% to ≤ 45 wt.-%, relating to the anode active material composition;
- carbon nanotubes in the amount of > 0 wt.-% to < 1 wt.-%, relating to the anode active material composition; and
- a binder, in particular a polymer binder, in the amount of 0.5 wt.-% to 4 wt.-%, relating to the anode active material composition.

The above-named components may sum up to 100 wt.-% relating to the anode active material composition and thus in particular to the composition which may be connected to a current collector.

Such an anode has significant advantages when used in an electrochemical energy storage device, especially in a lithium battery, like shown in more detail down below.

The predescribed materials, such as in particular the silicon-carbon composite material, anisometric flake graphite, carbon nanotubes, all present in a binder, may form the anode and are provided on a metal foil, in order to form the final anode electrode for an electrochemical storage device.

The anode as described comprises a silicon-carbon composite material in the amount of ≥ 45 wt.-% to ≤ 96 wt.-%, and preferably a silicon-carbon composite material in the amount of ≥ 61 to ≤ 90% wt.-%, relating to the anode active material composition. An amount relating to the anode shall generally mean an amount which relates to the anode material, i.e. to the material which is coated on the current collector.

Such a silicon carbon composite material may also be named silicon-carbon composite mixture. Preferably, the anode as described comprises a silicon-carbon composite material in the amount of ≥ 70 wt.-% to ≤ 88 wt.-%, such as in the amount of ≥ 75 wt.-% to ≤ 86 wt.-%, preferably in the amount of ≥ 77 wt.-% to ≤ 85 wt.-%, relating to the anode active material composition.

The term carbon refers to a material or substance consisting of carbon or at least comprising carbon. In this regard, a carbon material may comprise high purity, amorphous and crystalline materials. A carbon may be an activated carbon, a pyrolyzed dried polymer gel, a pyrolyzed polymer cryogel, a pyrolyzed polymer xerogel, a pyrolyzed polymer aerogel, an activated dried polymer gel, an activated polymer cryogel, an activated polymer xerogel, an activated polymer aerogel, or a combination thereof. In a further embodiment, a carbon is producible by a pyrolysis of coconut shells or other organic waste. In this regard, a polymer is a molecule comprising two or more repeating structural units. A porous carbon offers the advantage that it is usually easy to produce, usually has low impurities and a large pore volume. As a result, a porous carbon exhibits good electrical conductivity and high mechanical and chemical stability. In one embodiment, the carbon material has a high micropore volume ratio like described in more detail below.

In one further embodiment, the carbon is a hard carbon material, a graphitic carbon, or a oxide containing compound. For example, the oxide containing compound is a silicon oxide (SiO₂). Alternatively, a oxide containing compound is a titanium oxide (TiO₂), a tin oxide (SnO₂), or other oxides. A hard carbon material is a non-graphitizable carbon material. A hard carbon offers the advantage that it remains amorphous at elevated temperatures (typically > 1500 °C), whereas a "soft" carbon crystallizes and becomes graphite.

In one embodiment, the carbon may be a modified hard carbon. A modified hard carbon is a composite material comprising both a carbon, in particular a hard carbon, and a lithium alloy material. A lithium alloy material may be silicon, tin, germanium, nickel, aluminum, manganese, alumina (Al₂O₃), titanium, titanium oxide, sulphur, molybdenum, arsenic, gallium, phosphorus, selenium, antimony, bismuth, tellurium or indium or any other metal or metalloid capable of absorbing lithium.

The silicon portion may be a pure silicon or a material composition comprising silicon. For example, the silicon portion may be at least one alloy. An alloy may be a silicon-titanium alloy (Si-Ti), a silicon iron alloy (Si-Fe), a silicon nickel alloy (Si-Ni). In a further embodiment, the silicon portion may consist of P-dopants, As-dopants or N-dopants. A P-dopant is usually a phosphorus dopant, an As-dopant is usually an arsenic dopant and an N-dopant is usually a nitrogen dopant.

The presence of silicon in the silicon carbon composite material may be advantageous as in general, silicon comprises a significantly higher energy density than, e.g., graphite. For example, the energy density of silicon exceeds the energy density of graphite by a factor of ten.

It may further be provided that the anode comprises additionally to the described (first) silicon carbon composite material a further silicon-carbon composite material being different to the first silicon carbon composite material. In a further embodiment, the anode may comprise a further carbon and/or a further binder like described below. The at least one further carbon and/or the at least one binder may be dissolved in an aqueous medium. A further carbon may be a hard carbon material or a graphitic carbon or a oxide containing compound.

The anode according to the invention further comprises graphite, wherein graphite is present in an anisometric flake form. According to the present invention, an anisometric flake graphite shall in the broadest sense mean that the graphite is fully unsymmetrical or at least has unsymmetrical parts. Further, a flake form shall comprise each of flaky small, flaky large and ultraflaky as outlined below.

Preferably, anisometric flake graphite may be defined by at least one of the following properties, for example by two or by all of the following properties:
- a particle size diameter (PSD), defined as D90 by laserdiffraction, in the range of ≥ 3 µm to ≤ 50 µm;
- a tap density, derivable by DIN EN ISO 787-11, ASTM B527, in the range of 0,05 to 0,5 g/cm³; and/or
- the specific surface area by nitrogen adsorption (SSA BET), derivable by ASTM C1069, ISO 9277:2022, in the range of ≥ 5 to ≤ 35 m²/g.

Further, anisometric graphite may have a crystallinity, determined as LC value by the x-ray diffraction method, in the range of ≥ 90 nm, such as ≥ 100 nm for small particles and such as ≥ 150 nm for large particles.

The particle size diameter, the tap density and the specific surface area may further be divided in three ranges within the before-defines ranges, thereby being distinct with regard to size. These values are shown in table 1 in which the respective values are compared to respective values of generally uses round or rounded graphite particles.

All ranges may as such form a feature of the present invention, wherein different two or three of the properties particle size diameter, tap density and specific surface area may also be combined.

Flaky graphite may also be free of any coating provided on the respective particles, which is in contrast to round graphite particles known from the prior art.

Graphite is generally known as an anode material for lithium batteries, or lithium ion batteries, respectively. In general, graphite is a superior anode material and is known for a long time for lithium ion batteries, benefiting from its incomparable balance of relatively low cost, abundance, high energy density, power density, and very long cycle life. However, in prior art electrochemical energy storage devices, graphite is mostly present as the predominant material in terms of amount in the composition. In contrast to such an arrangement and according to the present invention, graphite is present in the anode in a comparably small amount, i.e. in an amount of ≥ 2 wt.-% to ≤ 45 wt.-%, preferably in an amount of ≥ 4 wt.-% to ≤ 21 wt.-%, such as in an amount of ≥ 8 wt.-% to ≤ 16 wt.-%, relating to the anode active material composition.

It was surprisingly found that exchanging a huge amount of graphite by the carbon silicon composite material allows even improved characteristics compared to pure graphite or a huge amount of graphite.

It was further shown that especially providing graphite in an isomeric flake-like form provides significant advantages over solutions of the prior art, especially regarding an improved cycle-stability.

Further, the anode as described comprises carbon nanotubes in an amount of > 0 wt.-% to ≤ 1 wt.-%, such as in the amount of ≥ 0.05 wt.-% to ≤ 2 wt.-%, for example, in the amount of ≥ 0.8 wt.-% to ≤ 1,5 wt.-%, relating to the anode active material composition. It was surprisingly found that adding carbon nanotubes can enhance the electrochemical properties of the anode and thus of the electrochemical energy storage device even further. In detail, especially the charging time can be further improved.

The carbon nanotubes can be described as an allotrope of carbon with a diameter in the range of 2 to 5 nanometer, for example, having a hollow structure and a high aspect ratio (length/diameter ratio) of about 200 to 5000. Carbon nanotubes such as single wall carbon nanotube (SW-CNT) can exhibit remarkable electrical conductivity. SW-CNT can be grown on silicon substrates using a chemical vapor deposition (CVD) method and represent electrically uniform arrays of single-walled carbon nanotubes. In some embodiments the single wall carbon nanotube as provided as suspension in water with some stabilizing polymers.

With regard to the suspension, these allow an especially easy processing as suspensions of carbon nanotubes in water for a very homogeneous solution.

It was shown that the advantages as described could be reached especially effectively in case the carbon nanotubes comprise single wall carbon nanotubes. However, it is also not excluded from the present invention that the carbon nanotubes are multi-wall carbon nanotubes.

Further, a binder is present in the anode as described, for example in the amount of 0.5 wt.-% to 4 wt.-%, such as in the amount of 0.8 wt.-% to 3 wt.-%, for example in the amount of 0.8 wt.-% to 2 wt.-%relating to the anode active material composition. A binder in a manner known per se is a binding agent or binding material. A binder thus refers to a material that can hold together individual components, in particular particles, of a substance, for example a carbon and the silicon-carbon composite material. A binder is typically arranged such that when particles are brought together with a corresponding binder, a cohesive mass is formed which can be further shaped into a new form.

The binder may be configured to bind all compounds as present in the anode, such as in particular, the particularly porous carbon and the silicon content of the first silicon-carbon composite, the graphite and the carbon nanotubes. In a further embodiment, the binder is adapted to bind further materials to at least one of the respective silicon-carbon composites. Thus, a binder is generally arranged to hold together the components of the silicon-carbon composite mixture and optionally further carbon materials of the electrode which may be formed as an anode.

The anode may comprise at least one further binder. This results in the advantage that carbon increases the conductivity of the electrode and thus provides improved conductivity. The at least one further binder further supports the mechanical stability.

The anode may comprise at least two binders, wherein a first binder is arranged to bind the particularly porous carbon and the silicon-carbon portion of the first silicon-carbon composite and the particularly porous carbon and the silicon portion of the at least one further silicon-carbon composite, and wherein the at least one further binder is arranged to bond the first silicon-carbon composite to the at least one further silicon-carbon composite.

Optionally, the silicon-carbon composite material comprises at least one further binder adapted to bond the first material component and the at least one further material component together.

For example, the binder is a styrene-butadiene rubber/carboxymethylcellulose (SBR/CMC) mixture, a polyacrylic acid (PAA) and/or a lithium polyacrylic (LiPAA) or a sodium polyacrylic (NaPAA). In an alternative embodiment, the binder is formed as a fluoropolymer such as a polytetrafluoroethylene (PTFE), a perfluoroalkoxy polymer resin (PFA), a fluorinated ethylene propylene (FEP), a polyethylene tetrafluoroethylene (ETFE), a polyvinyl fluoride (PVF), a polyethylene chlorotrifluoroethylene (ECTFE), a (polyvinylidene fluoride (PCDF), a (polychlorotrifluoroethylene (PCTFE), a trifluoroethanol, or combinations of at least one of these materials with at least one other material. In a further embodiment, a binder is a polyimide or a copolymer of polyacrylic acid and styrene-butadiene. However, it is especially preferred that the binder is a styrene-butadiene rubber/carboxymethylcellulose (SBR/CMC) mixture, a polyacrylic acid (PAA) and/or a lithium polyacrylic (LiPAA) or a sodium polyacrylic (NaPAA).

Generally, the binder may be used in an organic solution or in a water-based solution.

With regard to the separator, the latter may generally as well be formed as known in the prior art. Preferably, the separator may comprise a trilayer polymer. Such a polymer may for example comprise an inorganic coating, such as Al₂O₃, BaTiO₃.

It may further be preferred that the separator is laminated to the anode. This allows the advantage to improve stacking of electrodes, as the separator is already fixed on the anode electrode.

The electrolyte may comprise at least one compound selected from the group consisting of fluoroethylene carbonate, propylene carbonate, ethylene carbonate, lithium hexafluorophosphate, and lithium bis(fluorosulfonyl)imide. It could be shown that such electrolytes show superior properties when used in lithium batteries. In general, the electrolyte may comprise lithium ions and in particular a mixture of LiPF₆ and LiFSi, wherein the electrolyte may be based on fluoroethylenecarbonate (FEC) based. It may exemplarily comprise 1 to 10 wt.-% FEC, 0 to 20 wt.-% ethylene carbonate (EC), 0 to 30 wt.-% propylene carbonate (PC), each relating to the electrolyte, and optional additional additives.

Further and with regard to the cathode, the latter comprises a cathode material structure, wherein the cathode material structure comprises lithium nickel manganese cobalt oxide with a nickel content of more than 80 wt.-% and at least one of lithium iron phosphate and lithium manganese iron phosphate.

The cathode comprises in its cathode structure lithium nickel manganese cobalt oxide (NCM) with a nickel content of more than 85 wt.-% or more than 90 wt.-%. It may be provided that only one distinct lithium nickel manganese cobalt oxide is present or that a plurality of different lithium nickel manganese cobalt oxides is present. lithium nickel manganese cobalt oxide may follow the following structure: LiNiₐCo_{b}Mn_{c}O₂, wherein a, b and c are chosen such, that a nickel content of more than 80 wt.-% is realized, wherein a + b + c = 1.

Additionally to the described lithium nickel manganese cobalt oxide the cathode structure comprises at least one of lithium iron phosphate (LiFePO₄, LFP) and lithium manganese iron phosphate (LiMnFePO₄, LMFP). Given the above, it may be provided that the cathode material structure comprises lithium manganese iron phosphate. Alternatively or additionally, it may be provided that the cathode material structure comprises lithium manganese iron phosphate. Further, It may be provided that the cathode material structure comprises both of lithium iron phosphate and lithium manganese iron phosphate.

With this regard, it might be provided that the cathode structure comprises lithium nickel manganese cobalt oxide with a nickel content of more than 80 wt.-% and at least one of lithium iron phosphate and lithium manganese iron phosphate as sole cathode active materials or it may further be provided that the cathode or the cathode structure, respectively, comprises further cathode active materials, wherein the latter may generally be chosen as known in the art.

Which cathode active materials should be used may be chosen depending on the desired needs and in particular with regard to the desired effects and specific advantages which should be reached. Further, the specific cathode structure used may be taken into consideration. The describes structure may preferably be attached to a current collector in order to form a respective cathode as it is generally known in the art. The cathode current collector may for example comprise an aluminum foil, for example.

Thus, the cathode comprises a structure which in turn comprises a distinct cathode material or a plurality of cathode materials as defined before. It was shown that especially a combination of the before-named cathode materials, i.e. lithium nickel manganese cobalt oxide with a nickel content of more than 80 wt.-% and further and at least one of lithium iron phosphate and lithium manganese iron phosphate has significant advantages over prior art solutions.

It was shown that an electrochemical energy storage device has significant advantages with regard to security. In fact, in case a damage occurs, there is generally the risk of a thermal runaway which may cause a significant damage of the energy storage device and which may further show a risk for surrounding humans. The combination of the cathode materials as disclosed and especially the provision of at least one of lithium iron phosphate and lithium manganese iron phosphate may counteract thermal problems and may thus avoid a thermal runaway or may at leas reduce the risk of a thermal runaway. Thus, the thermal resistance is significantly improved.

Apart form that, it was found that the material selected from at least one of lithium iron phosphate and lithium manganese iron phosphate has a positive effect on the electrical properties of the cathode and thus of the respectively equipped electrochemical energy storage device. In detail, outstanding charging times may be reached which allow charging the electrochemical energy storage device from a very low state of charge to a very high state of charge in a very short time.

Further, it was found that the electrochemical energy storage device shows a significantly improved cycling stability and thus a long lifetime. This advantage is also of very high importance as in a great amount of applications, batteries shall be charged in a great amount and exchanging batteries comes along with a high cost factor, which shall be avoided.

With regard to the cathode structure, there may be several embodiments which may be combined and which may show different specific advantages.

According to an embodiment, the cathode material structure comprises at least one layer, wherein at least one layer comprises a mixture of lithium nickel manganese cobalt oxide and at least one of lithium iron phosphate and lithium manganese iron phosphate. As said, the mixture may comprise lithium nickel manganese cobalt oxide and lithium iron phosphate or it may comprise lithium nickel manganese cobalt oxide and lithium manganese iron phosphate or it may comprise lithium nickel manganese cobalt oxide and both of lithium iron phosphate and lithium manganese iron phosphate.

According to this embodiment, the positive effect of both of lithium iron phosphate and lithium manganese iron phosphate may be valid directly in the same layer the further active material, i.e. lithium nickel manganese cobalt oxide is present. This may allow an especially fast and reliable effect and may thus counteract a thermal runaway especially effectively.

In such a layer structure, only one layer may be present which comprises the respective cathode active materials as described. However, also a plurality of layers which may be the same or which may be different may be provided. The additional layers may fall within the definition as described or they may be formed differently. Therefore, all present layers may be formed in the same manner or they may differ with regard to the components present. With this regard, they may comprise the described components in different amounts or they may comprise a different composition with regard to the used components, e.g. in the range as defined or with different materials or compositions, respectively.

With regard to the mixture present, it may be preferred that the mixture comprises an amount of ≥ 80 wt.-% of lithium nickel manganese cobalt oxide, relating to the sum of lithium nickel manganese cobalt oxide, lithium iron phosphate and lithium manganese iron phosphate. This allows the electrical properties to be especially advantageous.

It may further be preferred that lithium nickel manganese cobalt oxide comprises a mixture of single crystalline lithium nickel manganese cobalt oxide and polycrystalline lithium nickel manganese cobalt oxide. According to this embodiment, the electrochemical properties of the electrochemical energy storage device may be improved even further, in particular with regard to cycling behavior and in particular with regard to charging time. Generally, the cathode may comprise a single crystal (SC) form, a polycrystalline form (PC) or a mixture of single crystal (SC) and polycrystalline (PC) form of layered transition metal oxide materials having the general formula Li₁₊ₓTM₁₋ₓO₂ with TM being Ni, Co, Mn, Al, Zr, Ti, Nb, W. The amount of these metals is preferably as follows: Ni = 0.7 to 0.95, Co = 0.01 to 0.15, Mn = 0.01 to 0.1, Al = 0 to 0.03, Zr = 0 to 0.01, Nb, Ti, W = 0 to 0.02, wherein x may be any value between 0 and 0.05. Further, in case a mixture of single crystal (SC) and polycrystalline (PC) form is present, the mixture ratio may be 20 to 35 wt% SC and 65 to 80% PC such as 25 to 35 wt% SC and 65 to 75% PC. Generall speaking, it might be preferred that the amount of PC is higher compared to the amount of VC as measured in wt.-%.

It may further be preferred that the cathode material structure comprises a layer structure, wherein the layer structure comprises at least two layers, wherein at least one of these two layers comprises lithium nickel manganese cobalt oxide and is free of lithium iron phosphate and lithium manganese iron phosphate and wherein one of these two layers is free of lithium nickel manganese cobalt oxide and comprises at least one of lithium iron phosphate and lithium manganese iron phosphate.

According to such an embodiment, thus, there are at least two layers in which one layer comprises lithium nickel manganese cobalt oxide as main component and is free of both of lithium iron phosphate and lithium manganese iron phosphate and it comprises at least one further layer, wherein the at least one further layer comprises at least one of lithium iron phosphate and lithium manganese iron phosphate as main component and is free of lithium nickel manganese cobalt oxide. The further layer may thus comprise lithium iron phosphate, it may comprise lithium manganese iron phosphate or it may comprise both of lithium iron phosphate and lithium manganese iron phosphate.

According to such an embodiment, the layer comprising lithium nickel manganese cobalt oxide may focus its properties to the electric performance and the further layers may show especially the properties of a kind of barrier in order to stop a thermal runaway. With this regard, providing lithium manganese iron phosphate may be especially preferred.

Like said, it may be provided that only two layers are present or a plurality of at least six, such as at least ten, layers are provided. **In** that case the respective layers having lithium nickel manganese cobalt oxide as main component on the one side and the layers having at least one of lithium iron phosphate and lithium manganese iron phosphate as main component may be provided at least in part in an alternating manner.

An electrochemical energy storage device as described before shows significant advantages over the prior art. In detail, outstanding charging times may be reached which allow charging the electrochemical energy storage device from a very low state of charge to a very high state of charge in a very short time. This improves the acceptance in the market significantly, especially in the automotive sector.

In particular, it was found that the electrochemical energy storage device shows a significantly improved cycling stability and thus a long lifetime. This advantage is also of very high importance as in a great amount of applications, batteries shall be charged in a great amount and exchanging batteries comes along with a high cost factor, which shall be avoided.

Apart from that, the risk of a thermal runaway is significantly reduced.

With regard to further advantages and technical features of the electrochemical energy storage device, it is referred to the electrically driven vehicle as well as to the examples and the figures.

Further described is an electrically driven vehicle, comprising an electric engine and an electrochemical energy storage device for supplying electrical energy to the electric engine, characterized in that the electrochemical energy storage device is formed like described before.

The vehicle may generally be any vehicle which is electrically driven. In particular, the electrically driven vehicle may be a fully electrically driven vehicle or a so-called hybrid vehicle. However, it may be preferred that the electrically driven vehicle is a fully electrically driven land vehicle, such as a car, a bus or a truck.

Such a vehicle comprises an electric engine and an electrochemical energy storage device for supplying electrical energy to the electric engine.

The electric engine may generally be arranged as known in the art, for example, the electrically driven engine may be a permanent synchronous machine as electric motor or an asynchronous machine as electric motor. Of course, both engines may be present and may be supplied with electrical energy from the electrochemical energy storage device. The latter is designed as defined above.

An electrochemical energy storage device shows the advantage of outstanding charging times which allow charging the electrochemical energy storage device from a very low state of charge to a very high state of charge in a very short time. Further, the cycle-stability and thus the lifetime is improved. This improves the acceptance in the market significantly.

Especially, thinking about secondary batteries as used in vehicles, the charging time and the cycling stability is a significant factor which may improve acceptance of electrically driven vehicles. Therefore, especially improving charging times is an important characteristic of secondary batteries for vehicles. However, of course ot should be noted that the anode as described here and consequently the electrochemical energy storage device is not limited to use in vehicles.

Apart from the above high cycling stability and resistance against damages, such as due to a thermal runaway, is significantly improved.

With regard to further advantages and technical features of the vehicle, it is referred to electrochemical energy storage device as well as to the examples and the figures.

Generally, single or a plurality of features and in particular amounts of respective compounds may be transferred between single embodiments.

In the following, the invention is explained by way of example with reference to the accompanying drawing and the accompanying examples by way of preferred embodiments, wherein the features shown below may each individually or in combination constitute an aspect of the invention:
Fig. 1 shows an exemplary electrochemical storage device in an embodiment according to the present invention; and
Fig. 2 shows a cathode structure in an embodiment according to the present invention.

In the figures, identical reference numbers identify similar elements. The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

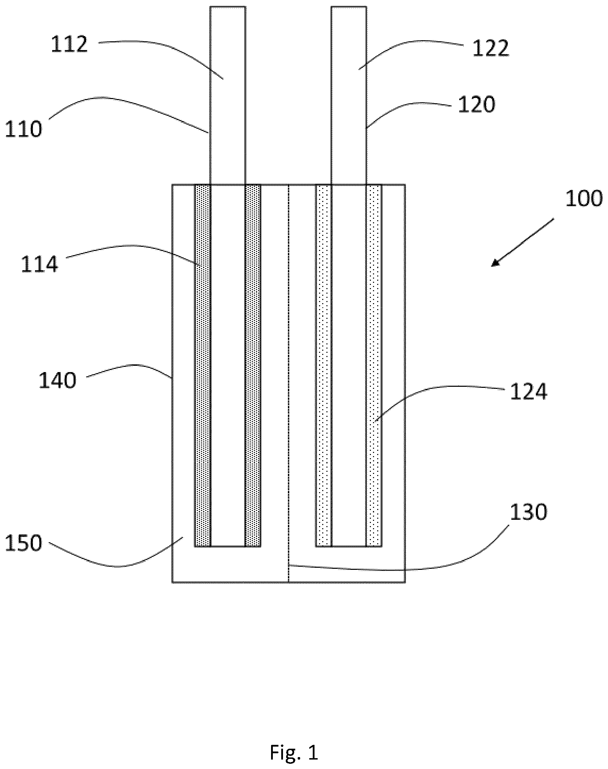

Fig. 1 shows a sectional view of an exemplary electrochemical storage device 100 with an anode 110, also called anode electrode. The anode 110 comprises a current collector 112 and an active material composition 114. The anode 110 or the anode active material composition 114, respectively, comprises at least
- a silicon-carbon composite material) in the amount of ≥ 45 wt.-% to ≤ 96 wt.-%, relating to the anode active material composition 114,
- an anisometric flake graphite in the amount of ≥ 2 wt.-% to ≤ 45 wt.-%, relating to the anode active material composition 114;

- carbon nanotubes in the amount of > 0 wt.-% to < 1 wt.-%, relating to the anode active material composition 114; and
- a binder, in particular a polymer binder, in the amount of 0.5 wt.-% to 4 wt.-%, relating to the anode active material composition 114.

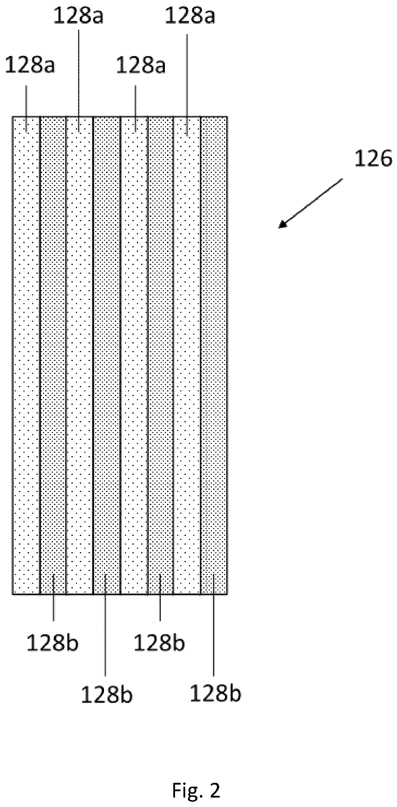

Further shown in figure 1 is a cathode 120, also called cathode electrode. The cathode 120 comprises a current collector 122 and an active material composition 124. The cathode 120 comprises in more detail a cathode material structure 126 which may comprise the active material composition 124 and is in greater detail shown in figure 2. The cathode material structure 126 comprises lithium nickel manganese cobalt oxide with a nickel content of more than 80 wt.-% and at least one of lithium iron phosphate and lithium manganese iron phosphate. With this regard, figure 1 shows an embodiment in which the cathode material structure 126 comprises a mixture of lithium nickel manganese cobalt oxide with a nickel content of more than 80 wt.-% and at least one of lithium iron phosphate and lithium manganese iron phosphate in one single layer.

Further shown is a separator 130 disposed between the cathode 120 and the anode 110. The before described arrangement may at least in part be provided in a cell housing 140 which in turn may comprise an electrolyte 150.

The electrochemical storage device 100 can be formed as a lithium-ion-battery cell in a pouch form. It is noted that Fig. 1 shows a simplified sectional view. The anode 110, the cathode 120 and the separator 130 are usually formed as multiple layers which are winded or folded in order to optimize packaging and in order to increase the possible surface area of the electrolyte 140. **In** the shown example, only one layer of the components is visible for illustrational purpose.

With regard a further embodiment of the cathode material structure 126, it is referred to figure 2. According to figure 2, the cathode material structure 126 comprises a layer structure, wherein the layer structure comprises at least two layers 128a and 128b, wherein at least one and thus a first layer 128a of these two layers 128a, 128b comprises lithium nickel manganese cobalt oxide and is free of lithium iron phosphate and lithium manganese iron phosphate and wherein a second layer 128b of these two layers 128a, 128b is free of lithium nickel manganese cobalt oxide and comprises at least one of lithium iron phosphate and lithium manganese iron phosphate. It can be seen that the respective layers are arranged in an alternate sequence.

## Claims

1. Electrochemical energy storage device (100), comprising
- an anode (110) with an anode active material composition (114);
- a cathode (120) with a cathode active material composition (124);
- a separator (130) disposed between the cathode (120) and the anode (110); and
- an electrolyte (150) disposed between the cathode (120) and the anode (110), wherein
- the anode (110) comprises at least
- a silicon-carbon composite material in the amount of ≥ 45 wt.-% to ≤ 96 wt.-%, relating to the anode active material composition (114),
- an anisometric flake graphite in the amount of ≥ 2 wt.-% to ≤ 45 wt.-%, relating to the anode active material composition (114);
- carbon nanotubes in the amount of > 0 wt.-% to < 1 wt.-%, relating to the anode active material composition (114); and
- a binder, in particular a polymer binder, in the amount of 0.5 wt.-% to 4 wt.-%, relating to the anode active material composition (114); and wherein
- the cathode comprises a cathode material structure (126) comprising the cathode active material composition (124), wherein the cathode material structure (126) comprises lithium nickel manganese cobalt oxide with a nickel content of more than 80 wt.-% and at least one of lithium iron phosphate and lithium manganese iron phosphate.

2. Electrochemical energy storage device (100) according to claim 1, wherein the cathode material structure (126) comprises at least one layer, wherein at least one layer comprises a mixture of lithium nickel manganese cobalt oxide and at least one of lithium iron phosphate and lithium manganese iron phosphate.

3. Electrochemical energy storage device (100) according to claim 2, wherein the mixture comprises an amount of ≥ 80 wt.-% of lithium nickel manganese cobalt oxide, relating to the sum of lithium nickel manganese cobalt oxide, lithium iron phosphate and lithium manganese iron phosphate.

4. Electrochemical energy storage device (100) according to any of claims 1 to 4, wherein the cathode material structure comprises a layer structure, wherein the layer structure comprises at least two layers (128a, 128b), wherein at least one layer (128a) of these two layers (128a, 128b) comprises lithium nickel manganese cobalt oxide and is free of lithium iron phosphate and lithium manganese iron phosphate and wherein a further layer (128b) of these two layers (128a, 128b) is free of lithium nickel manganese cobalt oxide and comprises at least one of lithium iron phosphate and lithium manganese iron phosphate.

5. Electrochemical energy storage device (100) according to any of claims claims 1 to 4, wherein lithium nickel manganese cobalt oxide comprises a mixture of single crystalline lithium nickel manganese cobalt oxide and polycrystalline lithium nickel manganese cobalt oxide.

6. Electrochemical energy storage device (100) according to any of claims 1 to 5, wherein the cathode material structure (126) comprises lithium iron phosphate.

7. Electrochemical energy storage device (100) according to any of claims 1 to 5, wherein the cathode material structure (126) comprises lithium manganese iron phosphate.

8. Electrochemical energy storage device (100) according to any of claims 1 to 7, wherein the cathode material structure (126) comprises both of lithium iron phosphate and lithium manganese iron phosphate.

9. Electrochemical energy storage device (100) according to any of claims 1 to 8, wherein the anisometric flake graphite has at least one of the following properties:
- a particle size diameter in the range of ≥ 3 µm to ≤ 50 µm;
- a tap density in the range of 0,05 to 0,5 g/cm³; and/or
- the specific surface area in the range of ≥ 5 to ≤ 35 m²/g.

10. Electrochemical energy storage device (100) according to any of claims 1 to 9, wherein the silicon-carbon composite material has a carbon scaffold with pores, wherein the pores of the carbon scaffold have a total pore volume of ≥ 0.5 cm³/g.

11. Electrochemical energy storage device (100) according to any of claims 1 to 10, wherein the anode (110) further comprises carbon black in an amount of ≥ 0.5 wt.-% to ≤ 2 wt.-%, relating to the anode active material (114).

12. Electrochemical energy storage device (100) according to any of claims 1 to 11, wherein the electrolyte (150) comprises at least one compound selected from the group consisting of fluoroethylene carbonate, propylene carbonate, ethylene carbonate, lithium hexafluorophosphate, and lithium bis(fluorosulfonyl)imide.

13. Electrochemical energy storage device (100) according to any of claims 1 to 12, wherein the electrolyte comprises lithium ions.

14. Anode according to any of claims 1 to 13, wherein the binder is a styrene-butadiene rubber/carboxymethylcellulose (SBR/CMC) mixture, a polyacrylic acid (PAA) and/or a lithium polyacrylic (LiPAA) or a sodium polyacrylic (NaPAA).

15. Electrically driven vehicle, comprising an electric engine and an electrochemical energy storage device (100) for supplying electrical energy to the electric engine, **characterized in that** the electrochemical energy storage device (100) is formed according to any of claims 1 to 14.
